# EUROPEAN PATENT APPLICATION

(11) **EP 2 644 476 A2**
(43) Date of publication of application: **02.10.2013**
(21) Application number: 13160304.5
(22) Date of filing: 21.03.2013
(51) Int. Cl.: B62D 6/10, G01L 5/22

(54) **Torque detection device, and electric power steering system including the torque detection device**

(30) Priority: 27.03.2012 JP 2012072064
(71) Applicant: JTEKT CORPORATION, Osaka-shi Osaka 542-8502 (JP)
(72) Inventor: Ishimoto, Yutaro, Osaka-shi, Osaka 542-8502 (JP)
(74) Representative: Winter, Brandl, Fürniss, Hübner, Röss, Kaiser, Polte - Partnerschaft

(57) **Abstract**

A torque detection device includes a yoke unit (50). The yoke unit (50) includes a first magnetic yoke (60) and a second magnetic yoke (70). The first magnetic yoke (60) and the second magnetic yoke (70) each are formed of a strip-shaped soft magnetic plate. The first magnetic yoke (60) has yoke proximity portions (61) and yoke distant portions (62) that are formed by bending the soft magnetic plate. The second magnetic yoke (70) has yoke proximity portions (71) and yoke distant portion (72) that are formed by bending the soft magnetic plate. The distance between each of the yoke proximity portions (61, 71) and a permanent magnet (42) is shorter than the distance between each of the yoke distant portions (62, 72) and the permanent magnet (42).

## Description

### BACKGROUND OF THE INVENTION

### 1. Field of the Invention

The invention relates to a torque detection device that detects magnetic fluxes that flow through a magnetic yoke, and an electric power steering system that includes the torque detection device. 2. Discussion of Background

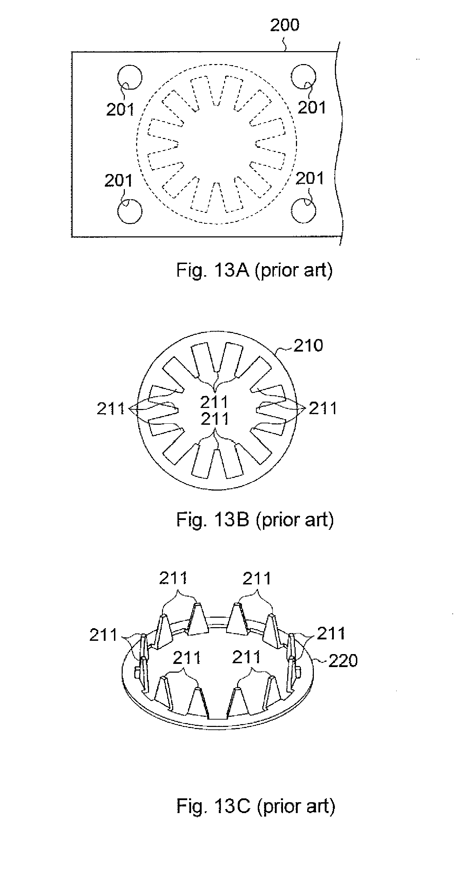

A conventional method of manufacturing a magnetic yoke will be described with reference to FIG. 13A to FIG. 13C. The conventional method of manufacturing a magnetic yoke includes a first step to a third step. In the first step shown in FIG. 13A, the position of a soft magnetic plate 200 at the time of stamping is determined by passing pins through holes 201 formed around a stamping target portion (a portion inside the dashed lines in the drawing) in the soft magnetic plate 200. In the second step shown in FIG. 13B, a stamped member 210 is formed from the soft magnetic plate 200 by stamping. In the third step shown in FIG. 13C, protrusions 211 of the stamped member 210 are bent. After completion of the third step, a magnetic yoke 220 having the protrusions 211 is formed. US 2006/0021451 A1 describes an example of a torque detection device that includes the magnetic yoke 220.

In the above-described manufacturing method, a portion of the soft magnetic plate 200, other than the stamped member 210, is not utilized to form the magnetic yoke 220. Therefore, the material-product ratio is low.

### SUMMARY OF THE INVENTION

The invention provides a torque detection device having a configuration that contributes to improvement in the material-product ratio and an electric power steering system that includes the torque detection device.

According to a feature of an example of the invention, a torque detection device includes: a first shaft; a second shaft; a torsion bar that coaxially couples the first shaft and the second shaft to each other; a permanent magnet that is attached to an outer periphery of the first shaft; a first magnetic yoke that is formed of a strip-shaped soft magnetic plate, that is attached to the second shaft, that is arranged within a magnetic field of the permanent magnet to form a magnetic circuit, that causes flow of magnetic fluxes between the permanent magnet and the first magnetic yoke to change in accordance with a change in rotational position with respect to the permanent magnet, and that has a yoke proximity portion and a yoke distant portion formed by bending the soft magnetic plate, a distance between the yoke proximity portion and the permanent magnet being smaller than a distance between the yoke distant portion and the permanent magnet; a second magnetic yoke that is attached to the second shaft, that is arranged within the magnetic field of the permanent magnet to form a magnetic circuit, and that causes flow of magnetic fluxes between the permanent magnet and the second magnetic yoke to change in accordance with a change in rotational position with respect to the permanent magnet; and a magnetic sensor that outputs a signal based on magnetic fluxes that flow between the first magnetic yoke and the second magnetic yoke.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a configuration diagram associated with a torque detection device according to a first embodiment of the invention, and is a configuration diagram that shows the configuration of an electric power steering system that includes the torque detection device;
FIG. 2 is a sectional view of the torque detection device according to the first embodiment, and is a sectional view that shows the sectional structure taken along the axial direction of a torsion bar;
FIG. 3 is an exploded perspective view of the torque detection device according to the first embodiment;
FIG. 4 is a front view of the torque detection device according to the first embodiment;
FIG. 5 is a sectional view associated with the torque detection device according to the first embodiment, and is a sectional view taken along the line ZA-ZA in FIG. 4;
FIG. 6 is a sectional view associated with the torque detection device according to the first embodiment, and is a sectional view taken along the line ZB-ZB in FIG. 4;
FIG. 7 is a sectional view associated with the torque detection device according to the first embodiment, and is a sectional view taken along the line ZC-ZC in FIG. 4;

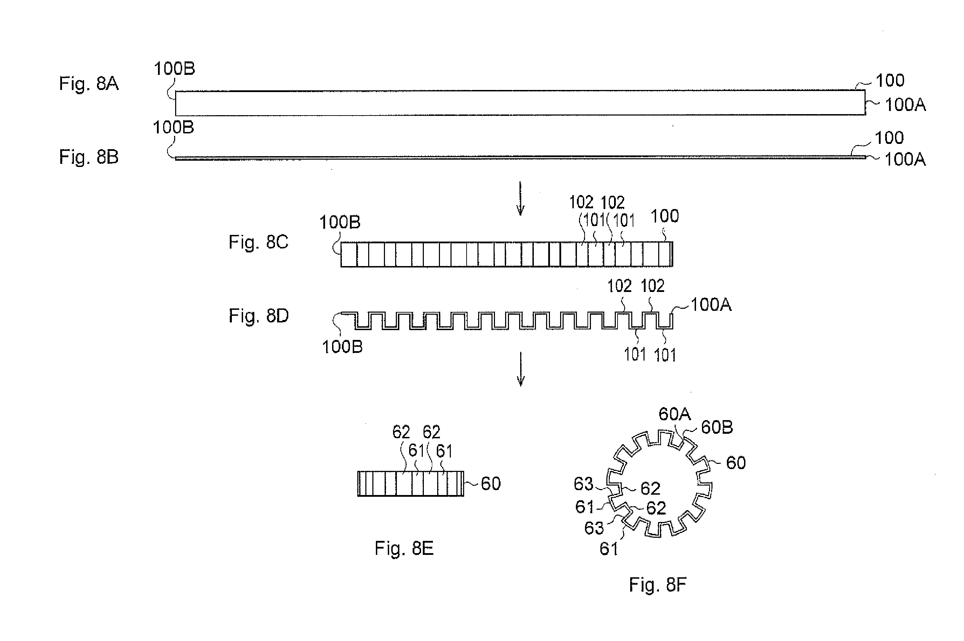

FIG. 8A to FIG. 8F are process drawings associated with a method of manufacturing the torque detection device according to the first embodiment, wherein FIG. 8A is a front view that shows the front structure of a soft magnetic plate in a bending preparation step, FIG. 8B is a front view that shows the planar structure of the soft magnetic plate in the bending preparation step, FIG. 8C is a front view that shows the front structure of the soft magnetic plate in a projections and depressions forming step, FIG. 8D is a front view that shows the planar structure of the soft magnetic plate in the projections and depressions forming step, FIG. 8E is a front view that shows the front structure of the soft magnetic plate in an annular shape forming step, and FIG. 8F is a front view that shows the planar structure of the soft magnetic plate in the annular shape forming step;
FIG. 9 is a view associated with a torque detection device according to a second embodiment of the invention, and is a front view of a yoke unit of the torque detection device;
FIG. 10 is a view associated with the torque detection device according to the second embodiment, and is a sectional view taken along the line ZD-ZD in FIG. 9;
FIG. 11A and FIG. 11B are process drawings associated with a method of manufacturing the torque detection device according to the second embodiment, wherein FIG. 11A is a front view that shows a material soft magnetic plate in a stamping preparation step, and FIG. 11B is a front view that shows a first soft magnetic plate and a second soft magnetic plate in a magnetic plate stamping step;

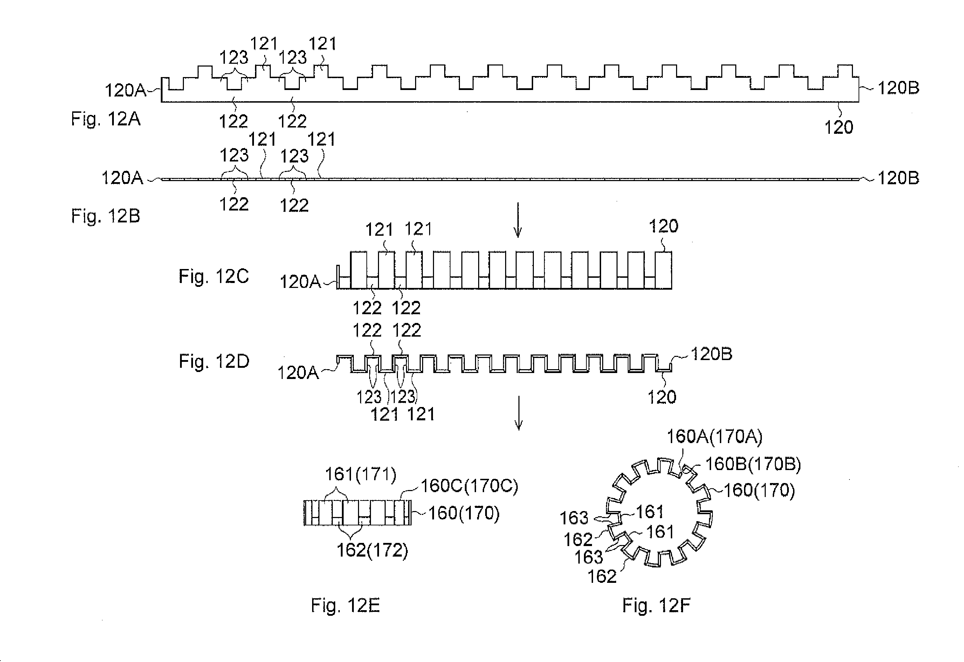

FIG. 12A to FIG. 12F are process drawings associated with the method of manufacturing the torque detection device according to the second embodiment, wherein FIG. 12A is a front view that shows the front structure of the first soft magnetic plate in the bending preparation step, FIG. 12B is a front view that shows the planar structure of the first soft magnetic plate in the bending preparation step, FIG. 12C is a front view that shows the front structure of the first soft magnetic plate in a projections and depressions forming step, FIG. 12D is a front view that shows the planar structure of the first soft magnetic plate in the projections and depressions forming step, FIG. 12E is a front view that shows the front structure of the first soft magnetic plate in an annular shape forming step, and FIG. 12F is a front view that shows the planar structure of the first soft magnetic plate in the annular shape forming step; and
FIG. 13A to FIG. 13C are process drawings associated with a method of manufacturing a magnetic yoke according to related art, wherein FIG. 13A is a process drawing that shows a first step, FIG. 13B is a process drawing that shows a second step, and FIG. 13C is a process drawing that shows a third step.

### DETAILED DESCRIPTION OF EMBODIMENTS

Hereinafter, embodiments of the invention will be described with reference to the accompanying drawings.

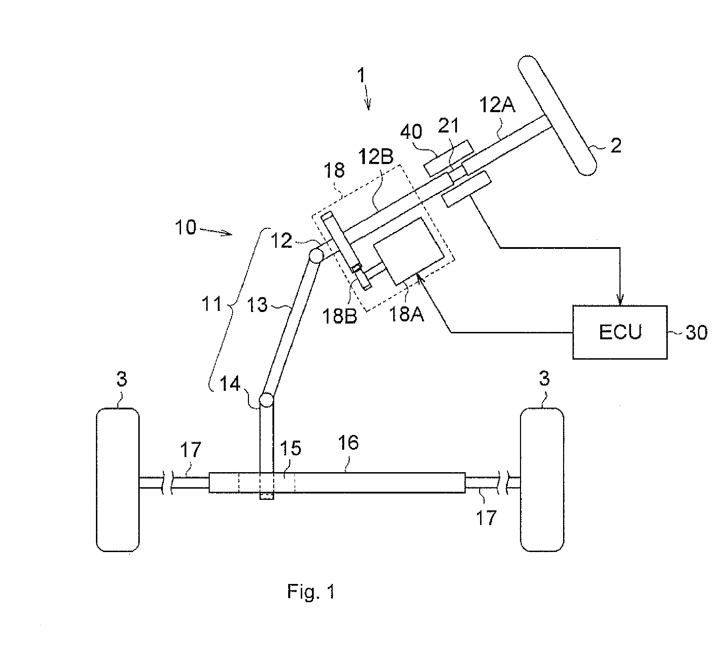

The configuration of an electric power steering system 1 according to a first embodiment of the invention will be described with reference to FIG. 1. The electric power steering system 1 includes a steering system body 10, an assist device 18, an ECU 30 and a torque detection device 40. The electric power steering system 1 assists a steering operation of steering wheel 2 with the use of the torque that is input into the steering system body 10 from the assist device 18.

The steering system body 10 includes a steering shaft 11, a rack shaft 16 and tie rods 17. The steering system body 10 transmits the rotation of the steering wheel 2 to steered wheels 3.

The steering shaft 11 includes a column shaft 12, an intermediate shaft 13 and a pinion shaft 14. The steering shaft 11 moves the rack shaft 16 in the axial direction in response to the rotation of the steering wheel 2.

The column shaft 12 includes a first shaft 12A, a second shaft 12B and a torsion bar 21. The column shaft 12 is configured such that the first shaft 12A and the second shaft 12B are rotatable relative to each other via the torsion bar 21.

The assist device 18 includes a motor 18A and a speed reduction mechanism 18B. The assist device 18 applies force for assisting a steering operation of the steering wheel 2 to the column shaft 12.

The ECU 30 calculates a computed value that corresponds to the magnitude of a torque that acts on the column shaft 12 on the basis of a signal output from the torque detection device 40. The ECU 30 controls the motor 18A on the basis of the computed value of the torque.

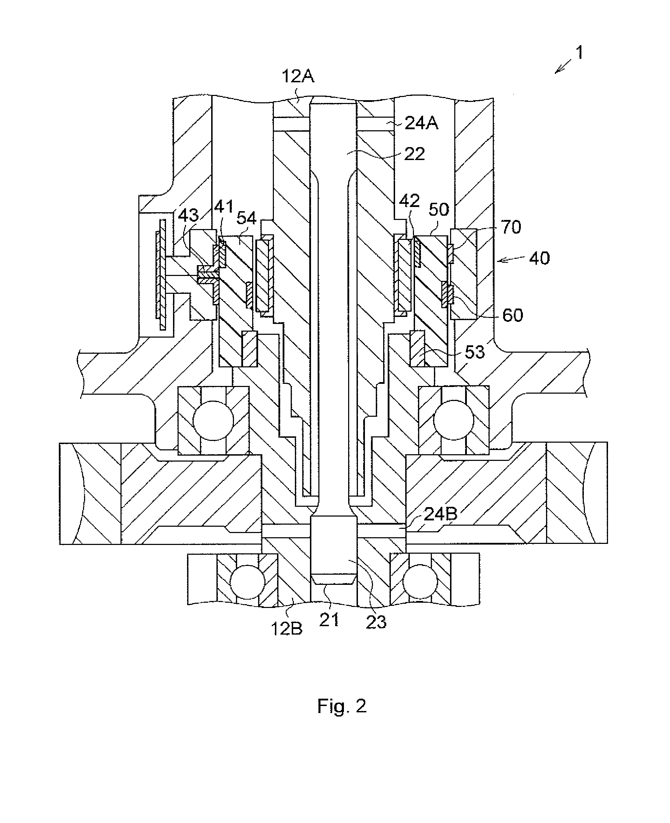

The configuration of the torsion bar 21 will be described with reference to FIG. 2. The torsion bar 21 has an input end portion 22, an output end portion 23 and fixing pins 24A, 24B. The input end portion 22 of the torsion bar 21 is coupled to the first shaft 12A by the fixing pin 24A, and the output end portion 23 of the torsion bar 21 is coupled to the second shaft 12B by the fixing pin 24B.

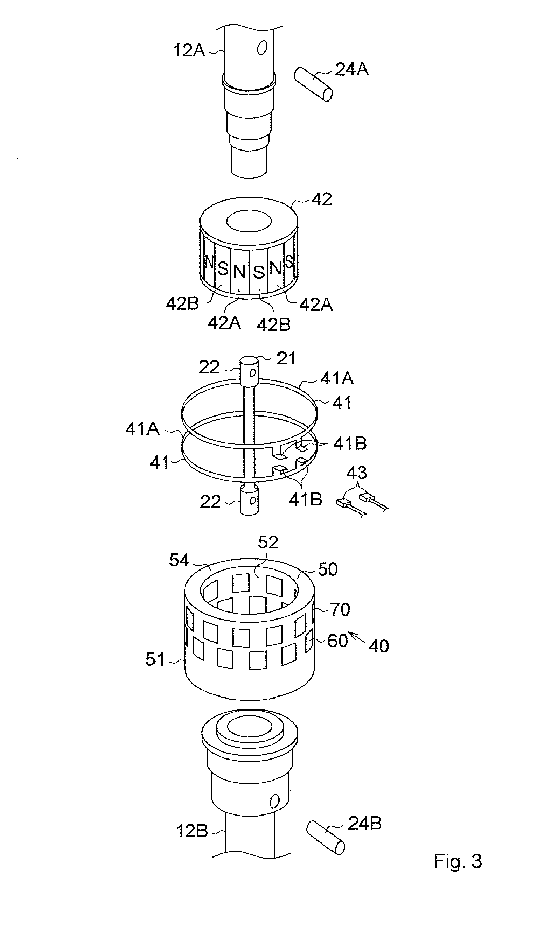

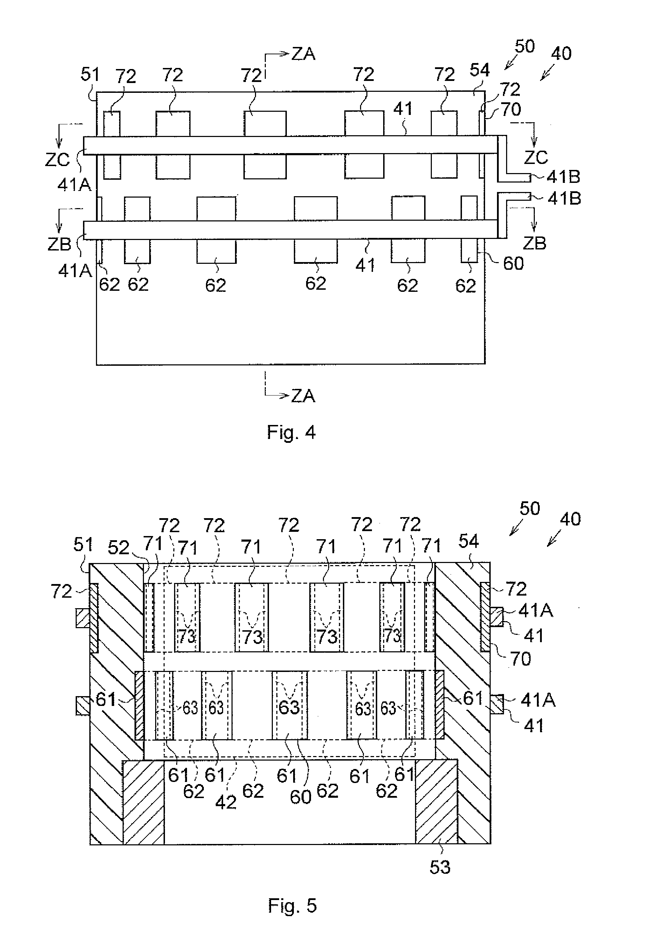

The configuration of a characterizing portion of the invention will be described with reference to FIG. 3 to FIG. 7. In FIG. 5, a permanent magnet 42 is indicated by dashed lines. In FIG. 4 to FIG. 7, the first shaft 12A, the second shaft 12B and the torsion bar 21 are omitted.

FIG. 3 shows the exploded perspective structure of the torque detection device 40. The torque detection device 40 includes two magnetic flux collecting rings 41, the permanent magnet 42, two Hall ICs that serve as magnetic sensors 43, a yoke unit 50, the torsion bar 21, the first shaft 12A and the second shaft 12B. The torque detection device 40 detects a torque that acts on the torsion bar 21 on the basis of the relative rotation between the permanent magnet 42 and the yoke unit 50 caused by the relative rotation between the first shaft 12A and the second shaft 12B.

Each magnetic flux collecting ring 41 has an annular shape. Each magnetic flux collecting ring 41 is attached to the outer periphery of the yoke unit 50. Each magnetic flux collecting ring 41 has an annular portion 41A and two arm portions 41B. One of the magnetic flux collecting rings 41 contacts a first magnetic yoke 60 of the yoke unit 50, at the inner periphery of the annular portion 41A. The other one of the magnetic flux collecting rings 41 contacts a second magnetic yoke 70 of the yoke unit 50, at the inner periphery of the annular portion 41A.

The permanent magnet 42 is fixed to the outer periphery of the first shaft 12A. The permanent magnet 42 has a plurality of north poles 42A and a plurality of south poles 42B. In the permanent magnet 42, the north poles 42A and the south poles 42B are formed alternately in the circumferential direction.

The magnetic sensors 43 are respectively arranged between the arm portions 41B of one of the magnetic flux collecting rings 41 and the arm portions 41B of the other one of the magnetic flux collecting rings 41. Each of the magnetic sensors 43 outputs a signal that corresponds to magnetic fluxes flowing between one arm portion 41B and the other arm portion 41B.

The yoke unit 50 is fixed to the outer periphery of the second shaft 12B. The yoke unit 50 includes a collar 53 (see FIG. 2), a resin portion 54, the first magnetic yoke 60 and the second magnetic yoke 70. The yoke unit 50 is configured such that the collar 53, the first magnetic yoke 60 and the second magnetic yoke 70 are integrated together by the resin portion 54. The second shaft 12B is press-fitted into the collar 53, so that the yoke unit 50 rotates together with the second shaft 12B.

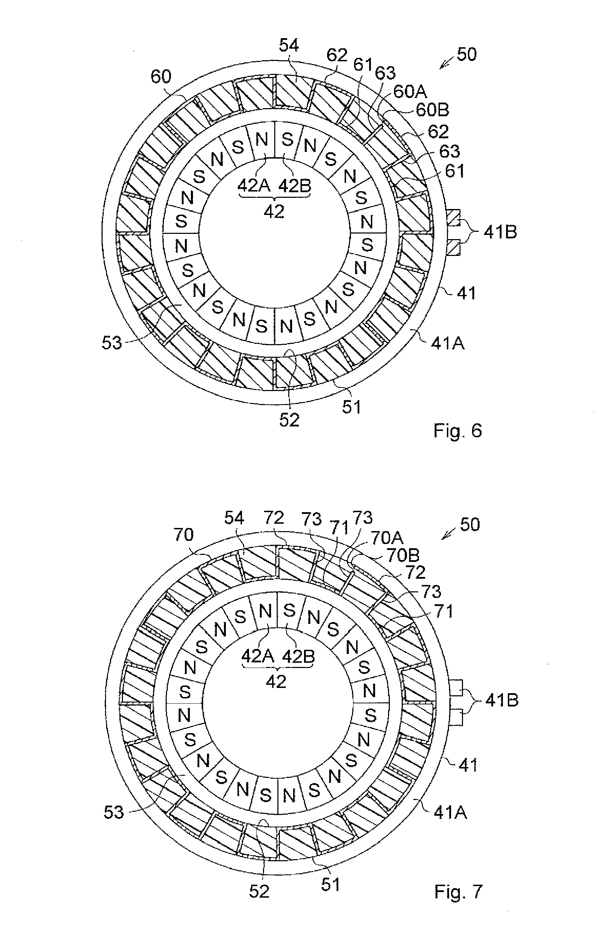

FIG. 6 shows the sectional structure of the first magnetic yoke 60. The first magnetic yoke 60 is formed of a strip-shaped soft magnetic plate. The first magnetic yoke 60 has an annular shape. The first magnetic yoke 60 has a plurality of yoke proximity portions 61, a plurality of yoke distant portions 62, a plurality of yoke connecting portions 63, a first plate end portion 60A and a second plate end portion 60B. The yoke proximity portions 61, the yoke distant portions 62 and the yoke connecting portions 63 of the first magnetic yoke 60 are formed by bending the soft magnetic plate. In the first magnetic yoke 60, the first plate end portion 60A and the second plate end portion 60B are opposed to each other at the end portion of one of the yoke connecting portions 63. The first magnetic yoke 60 is arranged within a magnetic field of the permanent magnet 42, and forms a magnetic circuit. The flow of magnetic fluxes between the first magnetic yoke 60 and the permanent magnet 42 changes in accordance with a change in the rotational position with respect to the permanent magnet 42.

Each yoke proximity portion 61 has a planar shape and is formed along the outer periphery of the permanent magnet 42. The inner periphery of each yoke proximity portion 61 faces the permanent magnet 42. The planar shape of each yoke proximity portion 61 is a slightly curved shape that corresponds to the shape of the outer periphery of the permanent magnet 42.

Each yoke distant portion 62 has a planar shape and is formed along the outer periphery of the permanent magnet 42. Each yoke distant portion 62 contacts the annular portion 41A of a corresponding one of the magnetic flux collecting rings 41 at its outer periphery. The planar shape of each yoke distant portion 62 is a slightly curved shape that corresponds to the shape of the outer periphery of the permanent magnet 42.

Each yoke connecting portion 63 has a planar shape and is formed along the radial direction of the permanent magnet 42. Each yoke connecting portion 63 connects the yoke proximity portion 61 and the yoke distant portion 62 that are adjacent to each other in the circumferential direction. The planar shape of each yoke connecting portion 63 is a smooth planar shape.

FIG. 7 shows the sectional structure of the second magnetic yoke 70. The second magnetic yoke 70 has the same configuration as that of the first magnetic yoke 60. The second magnetic yoke 70 is formed of a strip-shaped soft magnetic plate. The second magnetic yoke 70 has an annular shape. The second magnetic yoke 70 has a plurality of yoke proximity portions 71 that correspond to the yoke proximity portions 61, a plurality of yoke distant portions 72 that correspond to the yoke distant portions 62, a plurality of yoke connecting portions 73 that correspond to the yoke connecting portions 63, a first plate end portion 70A that corresponds to the first plate end portion 60A, and a second plate end portion 70B that corresponds to the second plate end portion 60B.

The relationship among the components of the yoke unit 50 will be described with reference to FIG. 4 and FIG. 5. In the yoke unit 50, a predetermined clearance is formed between the first magnetic yoke 60 and the second magnetic yoke 70 in the axial direction. In the yoke unit 50, the rotation phase of the first magnetic yoke 60 and the rotation phase of the second magnetic yoke 70 differ from each other. At an outer face 51 of the yoke unit 50, the yoke distant portions 62 and the yoke distant portions 72 are exposed alternately in the circumferential direction of the outer face 51. At an inner face 52 of the yoke unit 50, the yoke proximity portions 61 and the yoke proximity portions 71 are exposed alternately in the circumferential direction of the inner face 52.

The relationship between the first magnetic yoke 60 and the permanent magnet 42 will be described with reference to FIG. 6. In the yoke unit 50, the distance in the radial direction between each yoke proximity portion 61 and the permanent magnet 42 is shorter than the distance in the radial direction between each yoke distant portion 62 and the permanent magnet 42. In the yoke unit 50, when the torsion bar 21 is not twisted, the boundary between any adjacent north pole 42A and south pole 42B of the permanent magnet 42 coincides with a corresponding one of the yoke connecting portions 63.

The relationship between the second magnetic yoke 70 and the permanent magnet 42 will be described with reference to FIG. 7. In the yoke unit 50, the distance in the radial direction between each yoke proximity portion 71 and the permanent magnet 42 is shorter than the distance in the radial direction between each yoke distant portion 72 and the permanent magnet 42. In the yoke unit 50, when the torsion bar 21 is not twisted, the boundary between any adjacent north pole 42A and south pole 42B of the permanent magnet 42 coincides with a corresponding one of the yoke connecting portions 73.

Detection of magnetic fluxes with the use of the torque detection device 40 will be described with reference to FIG. 3. In the torque detection device 40, when the torsion bar 21 is not twisted, the amount of magnetic fluxes flowing between each yoke proximity portion 61 and a corresponding one of the north poles 42A is equal to the amount of magnetic fluxes flowing between each yoke proximity portion 61 and a corresponding one of the south poles 42B. Therefore, a closed-loop magnetic circuit is formed over the north poles 42A, the yoke proximity portions 61 and the south poles 42B. Similarly, a closed-loop magnetic circuit is formed in the second magnetic yoke 70.

Therefore, magnetic fluxes do not flow between the arm portions 41B of the magnetic flux collecting ring 41 that is in contact with the first magnetic yoke 60 and the arm portions 41B of the magnetic flux collecting ring 41 that is in contact with the second magnetic yoke 70. Therefore, each magnetic sensor 43 outputs a reference signal that indicates that magnetic fluxes are not flowing.

In the torque detection device 40, when the torsion bar 21 is twisted, the amount of magnetic fluxes flowing between each yoke proximity portion 61 and a corresponding one of the north poles 42A is different from the amount of magnetic fluxes flowing between each yoke proximity portion 61 and a corresponding one of the south poles 42B. In addition, the amount of magnetic fluxes flowing between each yoke proximity portion 71 and a corresponding one of the north poles 42A is different from the amount of magnetic fluxes flowing between each yoke proximity portion 71 and a corresponding one of the south poles 42B. At this time, because the rotation phase of the first magnetic yoke 60 and the rotation phase of the second magnetic yoke 70 differ from each other, the polarity of the first magnetic yoke 60 and the polarity of the second magnetic yoke 70 differ from each other.

Therefore, magnetic fluxes flow from one of the first magnetic yoke 60 and the second magnetic yoke 70 to the other one of the first magnetic yoke 60 and the second magnetic yoke 70. In addition, the amount of magnetic fluxes flowing between the first magnetic yoke 60 and the second magnetic yoke 70 increases with an increase in the amount of rotation of the permanent magnet 42 with respect to the magnetic yokes 60, 70. Then, each magnetic sensor 43 outputs a signal that corresponds to the amount of magnetic fluxes flowing between the first magnetic yoke 60 and the second magnetic yoke 70.

A method of manufacturing the first magnetic yoke 60 will be described with reference to FIG. 8A to FIG. 8F. The second magnetic yoke 70 is manufactured by the same manufacturing method as that of the first magnetic yoke 60. Therefore, the description of the method of manufacturing the second magnetic yoke 70 will be omitted.

The method of manufacturing the first magnetic yoke 60 includes a bending preparation step, a projections and depressions forming step and an annular shape forming step. Work in each step is manually conducted by a worker or conducted with the use of a machine tool that is operated by a worker.

In the bending preparation step (see FIG. 8A and FIG. 8B), the worker places a strip-shaped soft magnetic plate 100 on a pressing machine. The strip-shaped soft magnetic plate has a size corresponding to one first magnetic yoke 60 or one second magnetic yoke 70.

In the projections and depressions forming step (see FIG. 8C and FIG. 8D), the worker forms a plurality of projections 101 and a plurality of depressions 102 in the soft magnetic plate 100 by bending the soft magnetic plate 100 with the use of the pressing machine. Each projection 101 and each depression 102 have the same size in the longitudinal direction of the soft magnetic plate 100.

In the annular shape forming step (see FIG. 8E and FIG. 8F), the worker forms the soft magnetic plate 100 into an annular shape by causing the first plate end portion 100A and the second plate end portion 100B to be opposed to each other. The first plate end portion 100A and the second plate end portion 100B are the end portions of the soft magnetic plate 100 having the projections 101 and the depressions 102. Through the annular shape forming step, the soft magnetic plate 100 is formed as the first magnetic yoke 60. That is, the projections 101 of the soft magnetic plate 100 form the yoke proximity portions 61, and the depressions 102 of the soft magnetic plate 100 form the yoke distant portions 62.

The steering system 1 according to the present embodiment produces the following advantageous effects.
(1) Each of the magnetic yokes 60, 70 is formed of the strip-shaped soft magnetic plate 100. Therefore, the material-product ratio of the soft magnetic plate in the present embodiment is higher than that in the related art in which the magnetic yoke is formed by stamping as shown in FIG. 13A to FIG. 13C. That is, the torque detection device 40 has a configuration that contributes to improvement in the material-product ratio.

(2) The magnetic yoke 60 has the yoke proximity portions 61 having a planar shape, and the magnetic yoke 70 has the yoke proximity portions 71 having a planar shape. With this configuration, the uniformity of the flow of magnetic fluxes between the yoke proximity portions 61, 71 and the permanent magnet 42 is higher than that in a configuration in which the yoke proximity portions 61, 71 have unevenness. Therefore, the accuracy of detecting magnetic fluxes with the use of the torque detection device 40 is less likely to decrease.

(3) In each of the magnetic yokes 60, 70, the yoke proximity portions 61 or the yoke proximity portions 71 face the permanent magnet 42. Therefore, the structures of the yoke proximity portions 61, 71 exert a large influence on the magnetic flux detection characteristics. On one hand, the yoke connecting portions 63, 73 do not face the permanent magnet 42. Therefore, the structures of the yoke connecting portions 63, 73 exert a small influence on the magnetic flux detection characteristics. On the other hand, at the portions at which the first plate end portions 60A, 70A are opposed to the second plate end portions 60B, 70B, variations in shape are more likely to occur due to a manufacturing error, or the like, than at the continuous portions of the soft magnetic plates 100.

On the basis of the above points, in the torque detection device 40, the first plate end portion 60A is opposed to the second plate end portion 60B at the end portion of one of the yoke connecting portions 63 that exert a small influence on the magnetic flux detection characteristics, and the first plate end portion 70A is opposed to the second plate end portion 70B at the end portion of one of the yoke connecting portions 73 that exert a small influence on the magnetic flux detection characteristics. Therefore, it is possible to suppress variations in the magnetic flux detection characteristics among products.

Next, a second embodiment of the invention will be described. The torque detection device 40 according to the second embodiment differs from the torque detection device 40 (see FIG. 3) according to the first embodiment in the following portions, and has the same configuration in the other portions. The torque detection device 40 includes a first magnetic yoke 160 instead of the first magnetic yoke 60 and includes a second magnetic yoke 170 instead of the second magnetic yoke 70. In the following description, components of the second embodiment, which correspond to the components of the first embodiment, have equivalent or similar functions to those of the corresponding components in the first embodiment.

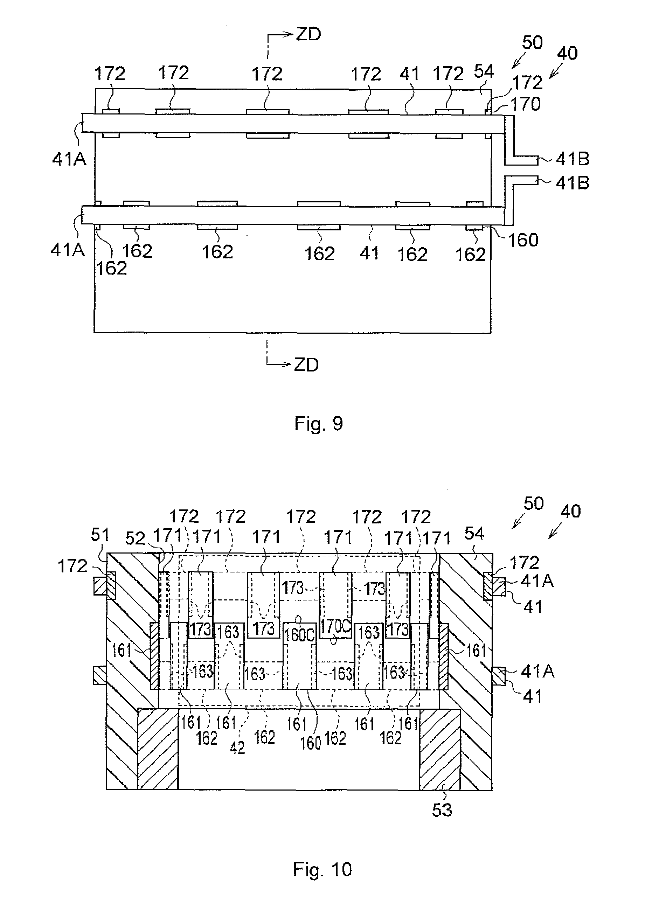

The details of the difference from the torque detection device 40 according to the first embodiment will be described with reference to FIG. 9 and FIG. 10. The same configurations as those of the steering system 1 in the first embodiment will be denoted by the same reference numerals as those in the first embodiment, and part or all of the description will be omitted. In FIG. 9 and FIG. 10, the first shaft 12A, the second shaft 12B and the torsion bar 21 are omitted. In FIG. 10, the permanent magnet 42 is indicated by dashed lines.

The first magnetic yoke 160 is formed of a strip-shaped soft magnetic plate. The first magnetic yoke 160 has an annular shape. The first magnetic yoke 160 has a plurality of yoke proximity portions 161 corresponding to the yoke proximity portions 61 in the first embodiment, a plurality of yoke distant portions 162 corresponding to the yoke distant portions 62 in the first embodiment, a plurality of yoke connecting portions 163 corresponding to the yoke connecting portions 63 in the first embodiment, a first plate end portion 160A, a second plate end portion 160B and a first yoke upper end 160C. The yoke proximity portions 161, the yoke distant portions 162 and the yoke connecting portions 163 of the first magnetic yoke 160 are formed by bending the soft magnetic plate. In the first magnetic yoke 160, the first plate end portion 160A and the second plate end portion 160B are opposed to each other at an intermediate portion of one of the yoke connecting portions 163 (see FIG. 12F).

In the first magnetic yoke 160, the width of each yoke proximity portion 161 is larger than the width of each yoke distant portion 162. In the first magnetic yoke 160, the width of each yoke connecting portion 163 is smaller than the width of each yoke proximity portion 161, and is larger than the width of each yoke distant portion 162. In the first magnetic yoke 160, the width of each yoke proximity portion 161, the width of each yoke distant portion 162 and the width of each yoke connecting portion 163 are set to respective constant values.

The first yoke upper end 160C is formed of the upper ends of the yoke proximity portions 161, which face the second magnetic yoke 170, the upper ends of the yoke distant portions 162, which face the second magnetic yoke 170, and the upper ends of the yoke connecting portions 163, which face the second magnetic yoke 170.

The second magnetic yoke 170 has the same configuration as that of the first magnetic yoke 160. The second magnetic yoke 170 is formed of a strip-shaped soft magnetic plate. The second magnetic yoke 170 has an annular shape. The second magnetic yoke 170 has a plurality of yoke proximity portions 171 corresponding to the yoke proximity portions 161, a plurality of yoke distant portions 172 corresponding to the yoke distant portions 162, a plurality of yoke connecting portions 173 corresponding to the yoke connecting portions 163, a first plate end portion 170A (see FIG. 12F) corresponding to the first plate end portion 160A, a second plate end portion 170B (see FIG. 12F) corresponding to the second plate end portion 160B and a second yoke lower end 170C corresponding to the first yoke upper end 160C.

The relationship among the components of the yoke unit 50 will be described. In the yoke unit 50, a predetermined clearance is formed in the axial direction between the first magnetic yoke 160 and the second magnetic yoke 170. In the yoke unit 50, the rotation phase of the first magnetic yoke 160 and the rotation phase of the second magnetic yoke 170 differ from each other. At the outer face 51 of the yoke unit 50, the yoke distant portions 162 and the yoke distant portions 172 are exposed alternately in the circumferential direction of the outer face 51. At the inner face 52 of the yoke unit 50, the yoke proximity portions 161 and the yoke proximity portions 171 are exposed alternately in the circumferential direction of the inner face 52. At the inner face 52 of the yoke unit 50, part of each yoke proximity portion 171 is located between the corresponding yoke proximity portions 161 that are adjacent to each other in the circumferential direction. At the inner face 52 of the yoke unit 50, part of each yoke proximity portion 161 is located between the corresponding yoke proximity portions 171 that are adjacent to each other in the circumferential direction.

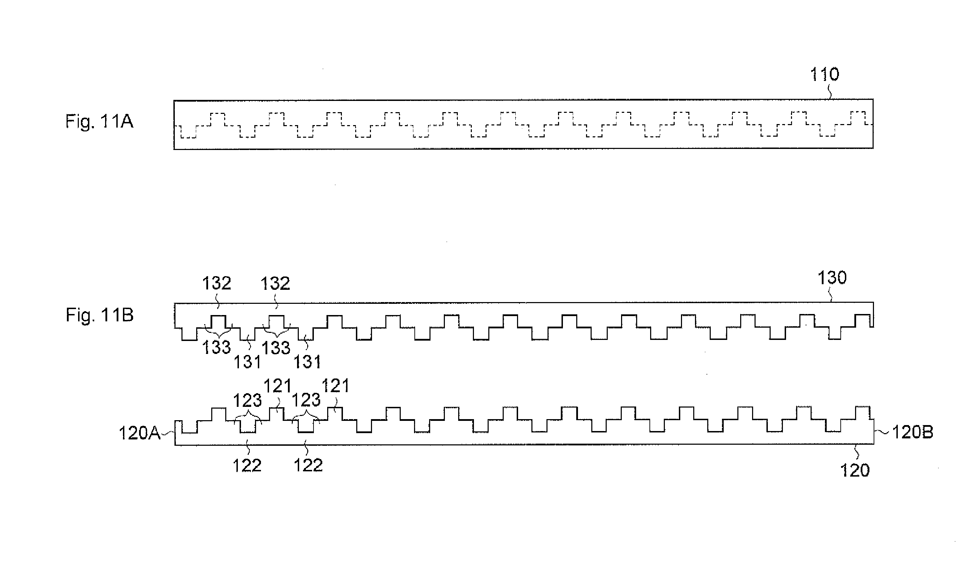

A method of manufacturing the magnetic yokes 160, 170 will be described with reference to FIG. 11A, FIG. 11B and FIG. 12A to FIG. 12F. The second magnetic yoke 170 is manufactured by the same manufacturing method as that of the first magnetic yoke 160. Therefore, the description on a projections and depressions forming step, a bending preparation step and an annular shape forming step for the second magnetic yoke 170 will be omitted.

The method of manufacturing the magnetic yokes 160, 170 includes a stamping preparation step, a soft magnetic plate stamping step, a projections and depressions forming step, a bending preparation step and an annular shape forming step. Work in each step is manually conducted by a worker or conducted with the use of a machine tool that is operated by a worker.

In the stamping preparation step (see FIG. 11A), the worker places a strip-shaped material soft magnetic plate 110 on a stamping machine. The strip-shaped material soft magnetic plate 110 has a size corresponding to one first magnetic yoke 160 or one second magnetic yoke 170.

In the soft magnetic plate stamping step (see FIG. 11B), the worker forms a first soft magnetic plate 120 and a second soft magnetic plate 130 by stamping the strip-shaped material soft magnetic plate 110 with the use of the stamping machine.

The first soft magnetic plate 120 has a plurality of wide-width portions 121, a plurality of narrow-width portions 122 and a plurality of medium-width portions 123. The first soft magnetic plate 120 is configured such that any adjacent one wide-width portion 121 and one narrow-width portion 122 are connected to each other by a corresponding one of the medium-width portions 123. In the first soft magnetic plate 120, the width of each wide-width portion 121 is larger than the width of each narrow-width portion 122. In the first soft magnetic plate 120, the width of each medium-width portion 123 is smaller than the width of each wide-width portion 121, and is larger than the width of each narrow-width portion 122.

The second soft magnetic plate 130 has the same shape as that of the first soft magnetic plate 120. The second soft magnetic plate 130 has a plurality of wide-width portions 131 corresponding to the wide-width portions 121, a plurality of narrow-width portions 132 corresponding to the narrow-width portions 122 and a plurality of medium-width portions 133 corresponding to the medium-width portions 123.

In the bending preparation step (see FIG. 12A and FIG. 12B), the worker arranges the strip-shaped first soft magnetic plate 120 on a pressing machine. In the projections and depressions forming step (see FIG. 12C), the worker forms the wide-width portions 121 that serve as a plurality of projections and the narrow-width portions 122 that serve as a plurality of depressions in the first soft magnetic plate 120 by bending the first soft magnetic plate 120 with the use of the pressing machine.

In the annular shape forming step (see FIG. 12E and FIG. 12F), the worker forms the first soft magnetic plate 120 having a plurality of projections and a plurality of depressions, into an annular shape by causing the first plate end portion 120A and the second plate end portion 120B of the first soft magnetic plate 120 to be opposed to each other. Through the annular shape forming step, the first soft magnetic plate 120 is formed into the first magnetic yoke 160. That is, the wide-width portions 121 of the first soft magnetic plate 120 constitute the yoke proximity portions 161, and the narrow-width portions 122 of the first soft magnetic plate 120 constitute the yoke distant portions 162.

The steering system 1 according to the present embodiment produces the following advantageous effects in addition to the advantageous effects (1) to (3) of the first embodiment.
(4) In the torque detection device 40, the first yoke upper end 160C and the second yoke lower end 170C form the boundary between the first soft magnetic plate 120 and the second soft magnetic plate 130. With this configuration, there is no waste portion of material between the first soft magnetic plate 120 and the second soft magnetic plate 130. Therefore, the material-product ratio of the material soft magnetic plate 110 improves.

(5) In the torque detection device 40, the width of each of the yoke proximity portions 161, 171 that face the permanent magnet 42 is larger than the width of each of the yoke distant portions 162, 172. With this configuration, the area of each of the yoke proximity portions 161, 171 that face the permanent magnet 42 is larger than that in the configuration in which the width of each of the yoke proximity portions 161,171 is equal to the width of each of the yoke distant portions 162, 172 or the width of each of the yoke proximity portions 161, 171 is smaller than the width of each of the yoke distant portions 162, 172. Therefore, leakage of magnetic fluxes between the yoke proximity portions 161, 171 and the permanent magnet 42 decreases.

(6) In the torque detection device 40, the width of each of the yoke distant portions 162, 172 is smaller than the width of each of the yoke proximity portions 161, 171. By employing this confguration, it is possible to arrange part of each yoke proximity portion 171 between the corresponding yoke proximity portions 161 that are adjacent to each other in the circumferential direction of the inner face 52, and to arrange part of each yoke proximity portion 161 between the corresponding yoke proximity portions 171 that are adjacent to each other in the circumferential direction of the inner face 52. Therefore, it is possible to reduce the size of the yoke unit 50 in the axial direction.

The invention includes embodiments other than the first and second embodiments. Hereinafter, modified examples of the first and second embodiments will be described as other embodiments of the invention. The following modified examples may be combined with each other.

Each yoke proximity portion 161 according to the second embodiment has a constant width. Alternatively, each yoke proximity portion 161 according to a modified example may be configured such that the width of the yoke proximity portion 161 is reduced from the center portion in the circumferential direction toward the end portion. Further alternatively, each yoke proximity portion 161 according to a modified example may be configured such that the width of the yoke proximity portion 161 is increased from the center portion in the circumferential direction toward the end portion (modified example P1).

Each yoke distant portion 162 according to the second embodiment has a constant width. Alternatively, each yoke distant portion 162 according to a modified example may be configured such that the width of the yoke distant portion 162 is reduced from the center portion in the circumferential direction toward the end portion. Further alternatively, each yoke distant portion 162 according to a modified example may be configured such that the width of the yoke distant portion 162 is increased from the center portion in the circumferential direction toward the end portion (modified example P2).

Each yoke connecting portion 163 according to the second embodiment has a constant width. Alternatively, each yoke connecting portion 163 according to a modified example may be configured such that the width is increased from the corresponding yoke proximity portion 161 toward the corresponding yoke distant portion 162. That is, the first yoke upper end 160C may have a tapered shape at each yoke connecting portion 163 (modified example P3).

In the first magnetic yoke 160 according to the second embodiment, the width of each yoke proximity portion 161 is larger than the width of each yoke distant portion 162. Alternatively, in the first magnetic yoke 160 according to a modified example, the width of each yoke proximity portion 161 may be equal to the width of each yoke distant portion 162 or may be smaller than the width of each yoke distant portion 162 (modified example P4).

A modification similar to at least one of the modifications according to the above-described modified examples P1 to P4 may be made to the second magnetic yoke 170 according to the second embodiment.

In the first magnetic yoke 60 according to the first embodiment, the first plate end portion 60A and the second plate end portion 60B are opposed to each other at the end portion of one of the yoke connecting portions 63. Alternatively, in the first magnetic yoke 60 according to a modified example, the first plate end portion 60A and the second plate end portion 60B may be opposed to each other at an intermediate portion of one of the yoke connecting portion 63 (modified example Q1).

In the first magnetic yoke 60 according to a modified example, the first plate end portion 60A and the second plate end portion 60B may be joined to each other (modified example Q2).

The first magnetic yoke 60 according to the first embodiment has an annular shape. Alternatively, the first magnetic yoke 60 according to a modified example may have a shape in which part of an annular shape is cut out (modified example Q3).

The first magnetic yoke 60 according to a modified example may have a configuration in which the yoke connecting portions 63 are omitted and adjacent yoke proximity portion 61 and yoke distant portion 62 are directly connected to each other (modified example Q4).

Each yoke proximity portion 61 according to the first embodiment has a planar shape. Alternatively, each yoke proximity portion 61 according to a modified example may have an uneven shape (modified example Q5).

Each yoke distant portion 62 according to the first embodiment has a planar shape. Alternatively, each yoke distant portion 62 according to a modified example may have an uneven shape (modified example Q6).

Each yoke proximity portion 61 according to the first embodiment has a shape slightly curved with respect to the outer periphery of the permanent magnet 42. Alternatively, each yoke proximity portion 61 according to a modified example may have a linear shape (modified example Q7).

Each yoke distant portion 62 according to the first embodiment has a shape slightly curved with respect to the outer periphery of the permanent magnet 42. Alternatively, each yoke distant portion 62 according to a modified example may have a linear shape (modified example Q8).

Each yoke proximity portion 61 according to the first embodiment forms the inner face 52 of the yoke unit 50 together with the inner periphery of the resin portion 54. Alternatively, each yoke proximity portion 61 according to a modified example may protrude radially inward from the inner periphery of the resin portion 54 (modified example Q9).

Each yoke distant portion 62 according to the first embodiment forms the outer face 51 of the yoke unit 50 together with the outer periphery of the resin portion 54. Alternatively, each yoke distant portion 62 according to a modified example may protrude radially outward from the outer periphery of the resin portion 54 (modified example Q10).

A modification similar to at least one of the modifications according to the above-described modified examples Q1 to Q10 may be made to at least one of the second magnetic yoke 70 according to the first embodiment, the first magnetic yoke 160 according to the second embodiment and the second magnetic yoke 170 according to the second embodiment.

The torque detection device 40 according to the first embodiment has the first magnetic yoke 60 on the first shaft 12A side, and has the second magnetic yoke 70 on the second shaft 12B side. Alternatively, the torque detection device 40 according to a modified example may have the second magnetic yoke 70 on the first shaft 12A side, and may have the first magnetic yoke 60 on the second shaft 12B side. A similar modification may be made to the torque detection device 40 according to the second embodiment.

The second magnetic yoke 70 according to the first embodiment is formed by the same manufacturing method as that of the first magnetic yoke 60. Alternatively, the second magnetic yoke 70 according to a modified example may be formed by a manufacturing method different from a manufacturing method for the first magnetic yoke 60. A similar modification may be made to the torque detection device 40 according to the second embodiment.

The torque detection device 40 according to the first and second embodiments may be installed on a system other than the electric power steering system 1. In short, the invention may be applied to any system, as long as the system includes a torque detection device that has a first magnetic yoke and a second magnetic yoke that are arranged within a magnetic field of a permanent magnet to form a magnetic circuit and that cause the flow of magnetic fluxes between the permanent magnet and the first and second magnetic yokes to change in accordance with a change in rotational position with respect to the permanent magnet.

## Claims

1. A torque detection device, comprising:
a first shaft;
a second shaft;
a torsion bar that coaxially couples the first shaft and the second shaft to each other;
a permanent magnet that is attached to an outer periphery of the first shaft;
a first magnetic yoke that is formed of a strip-shaped soft magnetic plate, that is attached to the second shaft, that is arranged within a magnetic field of the permanent magnet to form a magnetic circuit, that causes flow of magnetic fluxes between the permanent magnet and the first magnetic yoke to change in accordance with a change in rotational position with respect to the permanent magnet, and that has a yoke proximity portion and a yoke distant portion formed by bending the soft magnetic plate, a distance between the yoke proximity portion and the permanent magnet being smaller than a distance between the yoke distant portion and the permanent magnet;
a second magnetic yoke that is attached to the second shaft, that is arranged within the magnetic field of the permanent magnet to form a magnetic circuit, and that causes flow of magnetic fluxes between the permanent magnet and the second magnetic yoke to change in accordance with a change in rotational position with respect to the permanent magnet; and
a magnetic sensor that outputs a signal based on magnetic fluxes that flow between the first magnetic yoke and the second magnetic yoke.

2. The torque detection device according to claim 1, wherein:
the first magnetic yoke has a plurality of the yoke proximity portions, a plurality of the yoke distant portions and a plurality of yoke connecting portions, each one of the yoke proximity portions and a corresponding one of the yoke distant portions, which is adjacent to the each one of the yoke proximity portion, are connected to each other by a corresponding one of the yoke connecting portions;
each of the yoke proximity portions has a planar shape; and
each of the yoke distant portions has a planar shape.

3. The torque detection device according to claim 2, wherein:
the first magnetic yoke has a first plate end portion that is one of end portions of the soft magnetic plate and a second plate end portion that is the other one of the end portions of the soft magnetic plate; and
the first magnetic yoke has an annular shape in which the first plate end portion and the second plate end portion are opposed to each other at an intermediate portion of one of the yoke connecting portions or at an end portion of one of the yoke connecting portions.

4. The torque detection device according to any one of claims 1 to 3, wherein:
the second magnetic yoke has the same shape as that of the first magnetic yoke;
the first magnetic yoke has a first yoke projection and depression edge that is formed by consecutively arranging an edge of the yoke proximity portion and an edge of the yoke distant portion;
the second magnetic yoke has a second yoke projection and depression edge that is formed by consecutively arranging an edge of the yoke proximity portion and an edge of the yoke distant portion; and
the first magnetic yoke and the second magnetic yoke are formed from a single material soft magnetic plate that is a material of the first magnetic yoke and second magnetic yoke, and, when a cutting layout for the soft magnetic plate of the first magnetic yoke and a soft magnetic plate of the second magnetic yoke is set on the material soft magnetic plate, the yoke proximity portion of the first magnetic yoke faces the yoke distant portion of the second magnetic yoke, the yoke distant portion of the first magnetic yoke faces the yoke proximity portion of the second magnetic yoke, and, in the material soft magnetic plate, the first yoke projection and depression edge and the second yoke projection and depression edge form a boundary between the soft magnetic plate of the first magnetic yoke and the soft magnetic plate of the second magnetic yoke.

5. The torque detection device according to any one of claims 1 to 4, wherein
in the first magnetic yoke, a width of the yoke proximity portion is larger than a width of the yoke distant portion in an axial direction of the second shaft.

6. An electric power steering system, comprising the torque detection device according to any one of claims 1 to 5.
